(19) Europäisches Patentamt / European Patent Office / Office européen des brevets

(11) **EP 4 478 124 A1**

(12) **EUROPEAN PATENT APPLICATION**

(43) Date of publication:
18.12.2024 Bulletin 2024/51

(21) Application number: 23179874.5

(22) Date of filing: 16.06.2023

(51) International Patent Classification (IPC):
*G02F 1/137* (2006.01)     *G02F 1/141* (2006.01)

(52) Cooperative Patent Classification (CPC):
**G02F 1/13718; G02F 1/141;** G02F 1/13725;
G02F 1/13743; G02F 1/13756; G02F 1/13787;
G02F 1/1393

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• Innovidis AB
400 10 Göteborg (SE)
• SeeReal Technologies GmbH
01099 Dresden (DE)

(72) Inventors:
• **Komitov, Lachezar**
**411 29 GÖTEBORG (SE)**
• **Mandle, Richard J**
**Terrington YO60 6QA (GB)**

(74) Representative: **AWA Sweden AB**
**P.O. Box 11394**
**404 28 Göteborg (SE)**

Remarks:
•The application is published incomplete as filed
(Rule 68(1) EPC).
•The references to the drawings no. 4 and 10 are
deemed to be deleted (Rule 56(4)(6) EPC).

(54) **LIQUID CRYSTAL DEVICE WITH POLAR SWITCHING**

(57)     The present disclosure relates to a liquid crystal device. The device comprises a first portion and a second portion, each portion comprising a respective substrate, and a liquid crystal layer arranged in between the first portion and the second portion, wherein said liquid crystal layer comprises a mixture of a non-polar nematic liquid crystal and at least one ferroelectric nematic liquid crystal dopant, wherein the ferroelectric nematic liquid crystal dopant is provided as phaseseparated nano-sized domains surrounded by the non-polar nematic liquid crystal molecules, said liquid crystal layer having a polar nematic phase characterized by ferroelectric polarization, and flexoelectric polarization, wherein the sum of said ferroelectric polarization and flexoelectric polarization has a magnitude larger than the magnitude of said ferroelectric polarization and said flexoelectric polarization taken separately, and wherein at least one of the respective substrates, on an inner surface thereof facing the liquid crystal layer, is provided with an electrode pattern for generating an electric field within the liquid crystal layer, wherein the electric field is configured to couple with the flexoelectric polarization and the ferroelectric polarization of the liquid crystal layer to perform switching of said liquid crystal layer.

EP 4 478 124 A1

Fig.7

**Description**

**Technical field**

The present disclosure is in the field of liquid crystals and their device applications. More specifically, the present disclosure relates to a liquid crystal device driven by a linear coupling of the flexoelectric and ferroelectric polarization of the liquid crystal layer with the applied electric field in the device.

**Technical Background**

In general, Nematic liquid crystal displays (LCD) are operating on the basis of dielectric coupling, i.e. the coupling between dielectric anisotropy ($\Delta \varepsilon$) of the liquid crystal and an applied electric field, which gives rise to electro-optic response due to birefringence of liquid crystal. This response is quadratic with the applied electric field, i.e. is not polar, and arises from the switching of the liquid crystal molecules by the electric field. In conventional LCDs, the switching on time of the liquid crystal by the applied electric field, so called rise time -$\tau_{rise}$, depends on the applied electric field:

$$T_{rise} \cong \gamma / \epsilon_0 \, \Delta \epsilon E^2,$$

where $\gamma$ is rotational viscosity, $\Delta \varepsilon$ is the dielectric anisotropy of the LC, E is the electric field, and $\varepsilon_o$ is the dielectric permittivity in free space. The time for relaxation of the liquid crystal, due to elasticity of liquid crystal, to the initial field-off state, so-called fall (or switching off) time, $\tau_{fall}$ is given by:

$$\tau_{fall} \cong \gamma d^2 / K\pi^2,$$

where d is the cell thickness and K is the average elastic constant. As can be seen, whereas $\tau_{rise}$ time depends on the **applied electric field**, decay time $\tau_{fall}$ doesn't. It depends only on the physical properties of the liquid crystal, such as viscosity $\gamma$ and elastic properties, represented by the average elastic constant $K$, as well as on the device cell characteristics, such as the thickness of the cell gap d.

However, another is the situation when the liquid crystal possesses polarization and therefore it linearly couples to the applied electric field. Then, to switch the liquid crystal molecules from one position to another, having different optical appearance, takes place when the polarity of the applied electric field is changing. Then the switching time between these two positions depends on the electric field according:

$$\tau = \gamma / PE,$$

where P is the polarization of the liquid crystal, which can be flexoelectric in nematics and spontaneous or induced in chiral smectic liquid crystal materials. Consequently, the switching time $\tau$ from the position of the liquid crystal molecules at one polarity of the applied electric field to the position of the liquid crystal molecules, corresponding to the other polarity of the field, will depend on the magnitude of the applied electric field E, i.e. the switching time between these two positions can be controlled by the applied electric field and its polarity. Hence, the response time of the switching of the liquid crystal by polar coupling with the applied electric field, could be significantly shortened.

First example of employing a polar coupling for switching the liquid crystal by the coupling between the between the flexoelectric polarization $P_{flexo}$ of the liquid crystal layer and an in-plane electric field, generated by in-plane electrodes, was made in 1982 by I.Dozov at al. ("Flexoelectically controlled twist texture in a nematic liquid crystal, J.de Phys.Lett, 43 (1982), L-365 - L369) and switching of the liquid crystal molecules by the polar coupling between $P_{flexo}$ of the liquid crystal and an applied in-plane electric field is described US 7,876,385 B2. Switching of the liquid crystal by the polar coupling between $P_{flexo}$ of the liquid crystal and an electric field applied out-of-plane i.e. electric field, orthogonal to the device substrates, is described by L.Komitov et al. ("A novel polar electro-optic effect in reversibly pretilted nematic liquid crystal layers with weak anchoring", Proceeding of 3rd International Display research Conference, October 1983, Kobe, Japan).

However, to achieve fast switching of nematic liquid crystal by the polar coupling of $P_{flexo}$ of the nematic liquid crystal, with applied electric field, nematic liquid crystal with high $P_{flexo}$ is needed. Usually, conventionally nematic liquid crystals exhibit $P_{flexo}$ of order of several nC/m (E7 (Merck) has 16.3nc/m). To increase the magnitude of $P_{flexo}$ is not an easy task. It has been recently reported a method to enhance $P_{flexo}$ by mixing the nematic liquid crystal with a flexoelectric dopant, with strong shape anisotropy ("Flexoelectric polarization in a nematic liquid crystal enhanced by dopants with different molecular shape polarities" by M.Skarabot et al, ACS Omega, February, ACS Omega 2022 7 (11), 9785-9795 ). Using this method, almost 3 times enhancement of $P_{flexo}$ (44nC/Cm) was achieved. However, this method face with certain difficulties to select appropriate host nematic material as well as appropriate flexoelectric dopant(s).

An attempt to add to the flexoelectric switching of the nematic liquid crystal another kind of polar switching, caused by the coupling of spontaneous polarization $P_s$ of a polymer liquid crystal layer (made of polymer ferroelectric liquid crystal, such as chiral SmC, for instance), deposited onto the substrates' surfaces, facing the nematic liquid bulk layer, with an applied electric field, is suggested in US 7,876,385 B2. In this patent is also suggested to generate $P_s$, localized within the sub-volume of the bulk liquid crystal layer at the substrates' surfaces. In both cases, $P_s$, which is localized at the substrates' surface, and facilitate only the switching process of the liquid crystal by the polar coupling of $P_{flexo}$, if present, with the applied electric field. The suggested methods in US 7,876,385 B2, even though effective, enhanced the switching process essentially in the sub-volume region of the liquid crystal at the confining substrates' surface and affect the rest of the liquid crystal bulk via elastic forces, which is a slow process. Hence, the additional polar coupling of the applied electric field with the substrates' surface localized $P_s$, seemed to be not an efficient way for shortening the response times.

The linear coupling of different kinds, described above, may drive alone the switching process very fast, due to dependence of the switching times of the applied electric field, or may play the role as a starting mechanism of the switching process, which may be completed by the dielectric coupling with the applied electric field.

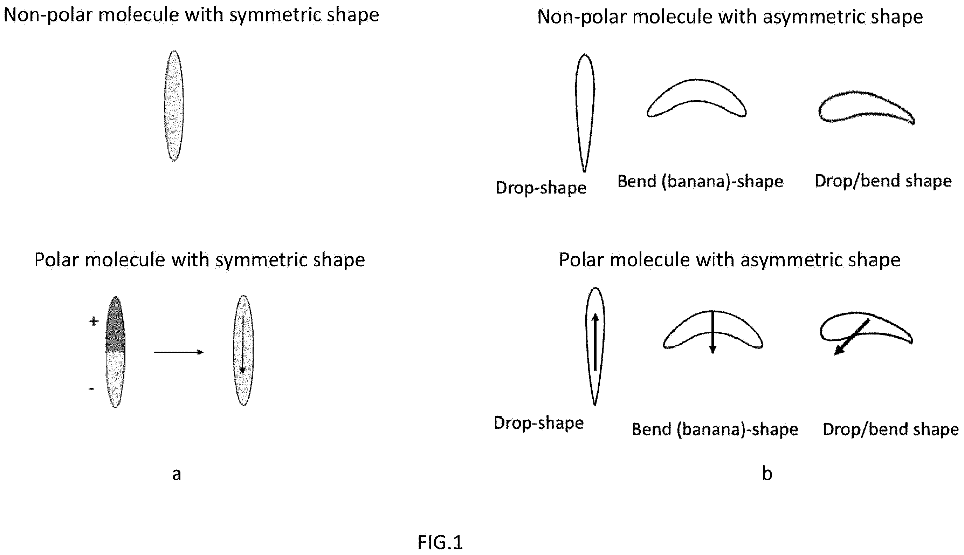

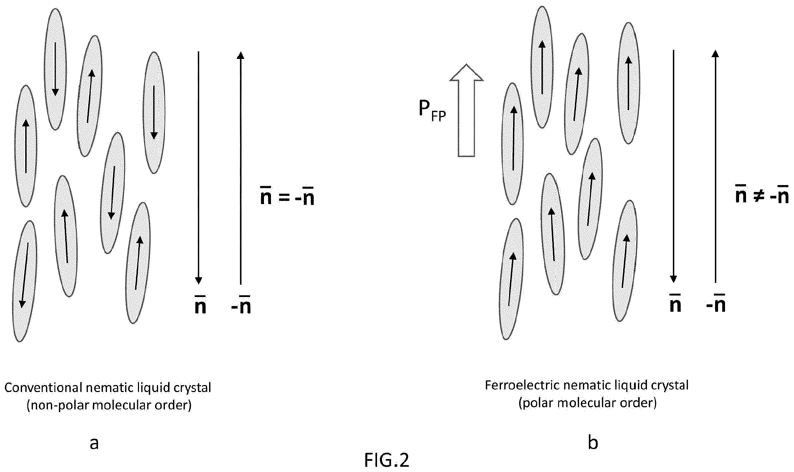

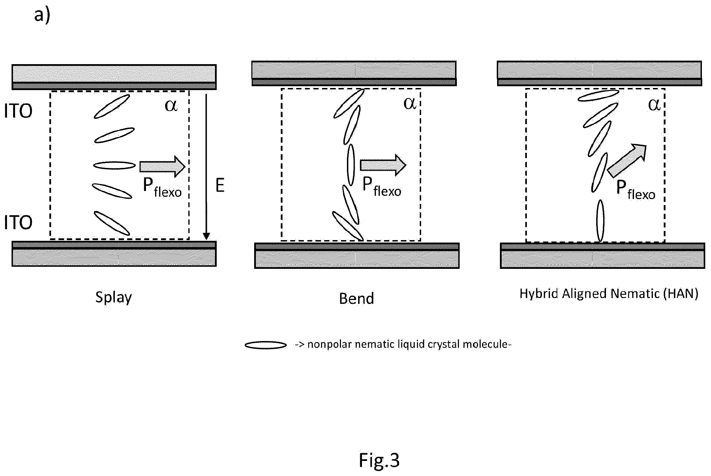

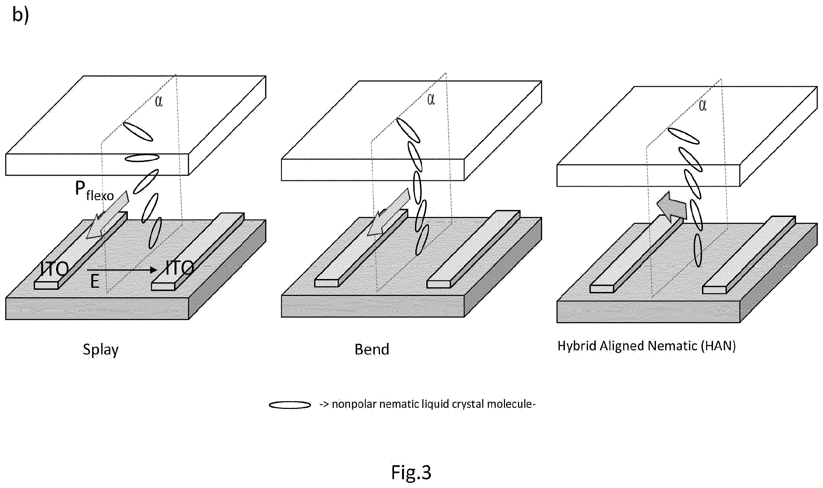

There are different kinds of electro-optic effects in nematic LC, most of them are due to the birefringence of the liquid crystals, which origin is the anisotropic molecular shape such as rotational ellipsoid, drop, banana or mixed drop/banana (Fig.1). The liquid crystal molecules may or may not have a permanent molecular net dipole moment thus being non-polar or polar (fig.1). Their molecular order in the conventional nematic liquid crystals is non-polar, as depicted in Fig.2a, i.e. the nematic director n fulfil the condition n=-n, although the liquid crystal molecules may have permanent molecular net dipole moment. In ferroelectric (polar) nematic liquid crystals, however, the molecular order is polar, and the nematic director obey the condition $n \neq -n$ (Fig.2b). When the conventionally (non-polar) nematic liquid crystals, which molecules have asymmetric molecular shape such as rotational ellipsoid, drop, banana or mixed drop/banana, possess in addition, a molecular net dipole moment (Fig.1b), then such nematic liquid crystal exhibits flexoelectric polarization $P_{flexo}$, if the liquid crystal alignment configuration contains elastic deformations such as splay, bend or splay/bend. Then, an electric field applied across the liquid crystal layer, i.e. perpendicular to the portions' substrates (Fig. 3a) or parallel to them (Fig.3b) switches $P_{flexo}$, resulting in switching of the liquid crystal preferred direction of orientation and thus switching the device optic axis, clockwise or anti-clockwise, depending on the polarity of the applied in-plane field, said switching being in a plane perpendicular to the device substrates, Fig.3a or parallel to it, Fig.3b.

Although effective, the linear coupling of $P_{flexo}$ with the applied electric field doesn't provide enough short switching times, due to moderate magnitude of $P_{flexo}$. As mentioned above, enhancement of $P_{flexo}$, is possible by adding proper flexoelectric dopants but this method has also some limitations.

Recently, a new class of nematic liquid crystals were discovered - the ferroelectric(polar) nematic liquid crystals (Polar in-plane surface orientation of a ferroelectric nematic liquid crystal: Polar monodomains and twisted state electro-optics, Xi Chen et al, PNAS 2021 Vol. 118 No. 22 ; A Fluid Liquid-Crystal Material with Highly Polar Order, Hiroya Nishikawa et al. Adv. Mater. 2017, 29, 1702354)

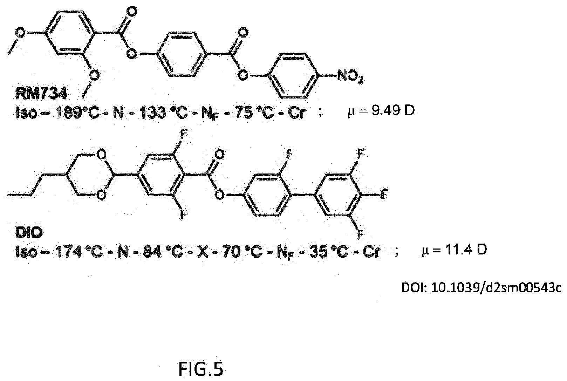

The structure of two such polar nematic liquid crystals, possessing ferroelectric phase, are depicted in Fig. 5. Characteristic features of the molecules of these ferronematic liquid crystal are the large longitudinal molecular dipole and their polar molecular order (n ≠ -n) (see Fig 2)

## Summary

The disclosure relates to liquid crystal device for generating images by the coupling between the sum of ferroelectric $P_{FP}$ and flexoelectric $P_{flexo}$ polarizations of the polar nematic liquid crystal layer, placed between first and second liquid crystal device portion, with an applied electric field, generated in the liquid crystal layer by the device electrode pattern (Fig.3) said electric field applied perpendicular (Fig.3a) or parallel (in-plane) (Fig.3b) to the first and second portion of the liquid crystal.

A general object of the present disclosure to alleviate the mentioned above problems and to provide an improved liquid crystal device, in particular, an object of the disclosure is to provide a liquid crystal device exhibiting fast electro-optic response, and hence enabling a satisfactory display of moving image as well as improvement of the other LCD characteristics, such as a contrast, angular viewing dependence and color performance.

According to a first aspect, a liquid crystal device is provided, the liquid crystal device comprising: a first portion and a second portion, each portion comprising a respective substrate, and a liquid crystal layer arranged in between the first portion and the second portion, wherein said liquid crystal layer comprises a mixture of a non-polar nematic liquid crystal and at least one ferroelectric nematic liquid crystal dopant, wherein the ferroelectric nematic liquid crystal dopant is provided as phaseseparated nano-sized domains surrounded by the non-polar nematic liquid crystal molecules, wherein said liquid crystal layer having a polar nematic phase characterized by ferroelectric polarization, and flexoelectric polarization, wherein the sum of said ferroelectric polarization and flexoelectric polarization has a magnitude larger than the magnitude of said ferroelectric polarization and said flexoelectric polarization taken separately, and wherein at least one of the respective substrates, on an inner surface thereof facing the liquid crystal layer, is provided with an electrode pattern for generating an electric field within the liquid crystal layer, wherein the electric field is configured to couple with the flexoelectric polarization and the ferroelectric polarization of the liquid crystal layer to perform switching of said liquid crystal layer.

Hereby, a device comprising a nematic liquid crystal composition capable of exhibiting both ferroelectric and flexoelectric polarization, which sum has larger magnitude than one of said ferroelectric polarization and flexoelectric polarization alone, is provided.

At least one of said first and second portions may be transparent. Said first portion is preferably substantially parallel to said second portion.

The ferroelectric nematic crystal dopant may be chosen from RM734 (Iso-189°C-N-133°C-$N_F$-75°C-Cr) or DIO (Iso-174°C-N-84°C-X-70°C- $N_F$-35°C-Cr) (H. Nishikawa et al, Adv. Mater. 2017, 29, 1702354; R. J. Mandle, S. J. Cowling, J. W. Goodby, Phys. Chem. Chem. Phys. 19, 11429-11435 (2017)).

The mixture may further comprise at least one flexoelectric dopant characterized by an asymmetric molecular shape such as drop, banana or combination of drop and banana shape. Hereby, the flexoelectric properties of the liquid crystal layer may be induced and/or increased by the dopant. Examples of flexoelectric dopants include, nematic liquid crystal dimers, such as CB7CB, hockeystick-shaped molecules SK-6 and SK-8 («Phase behavior and properties of the liquid-crystal dimer 1",7"-bis(4-cyanobiphenyl-4'-yl) heptane: A twist-bend nematic liquid crystal», M.Cestari et al, (https://doi.org/10.1103/PhysRevE.84.031704; "Structural organization and molecular self-assembly of a new class of polar and non-polar four-ring based bent-core molecules, Supreet, K et al,; Journal of Molecular Liquids, 2019, 295, 11168; "Flexoelectric polarization in a nematic liquid crystal enhanced by dopants with different molecular shape polarity", Miha Skarabot et al, https://doi.org/10.1021/acsomega.2c00023).

The flexoelectric polarization may be characterized by elastic deformation of splay, bend or mixed splay/bend type in a plane oriented perpendicular to the first and/or second portion.

The liquid crystal layer may possess helical molecular order. For example, the helix axis of the helical molecular order may be oriented substantially along the normal of the substrate of the first and/or second portion. Alternatively, the helix axis of the helical molecular order may be oriented substantially parallel to the substrate of the first and/or second portion of the device.

The liquid crystal layer may comprise a polymer network. Hereby, the liquid crystal layer may be stabilized.

The liquid crystal layer may comprise at least one dichroic dye.

The electrode pattern may comprise a plurality of electrodes deposited only on one of the substrates of first or second portion (single electrode device) or on both (double electrode device). According to the disclosure, the electrodes may have an arrangement for generating in-plane electric field within liquid crystal layer, which lines are substantially parallel to the substrate of the first portion and to the substrate of the second portion, or the electrodes may have arrangement for generating of out-of-plane electric field with lines being orthogonal to the substrates of first and second portions. Advantageously, in the liquid crystal device with double electrode structure, both in-plane and out-of-plane electric field, could be generated sequentially within the liquid crystal layer by applying appropriate electronic driving. Hence, the electrode pattern may be configured such that the electric field lines of the electric field are oriented substantially orthogonal to the substrate of the first portion and/or the second portion. Additionally, or alternatively, the electrode pattern may be configured such that the electric field lines of the electric field are oriented substantially orthogonal to the plane of the elastic deformation.

The electrode pattern may be provided with openings such that the electrode pattern is configured to produce fringe electric fields around the openings.

At least one of the respective substrates, on an inner surface thereof facing the liquid crystal layer, may be provided with an alignment layer arranged to interact with the liquid crystal layer.

The first substrate, on an inner surface thereof facing the liquid crystal layer, may be provided with a first electrode pattern and wherein the second substrate, on an inner surface thereof facing the liquid crystal layer, may be provided with a second electrode pattern. Hereby, a double electrode device is provided.

Other features and advantages of the present disclosure will become apparent from the following description of disclosure.

**Brief description of Drawings**

Fig.1 Schematic presentation of liquid crystal molecules with symmetric (a) and asymmetric shape b) of both nonpolar and polar molecules.

Fig.2 Nonpolar (a) and polar(b) molecular order in conventional (a) and polar liquid crystals (b).

Fig.3 a) Schematic presentation of liquid crystal alignment configurations of nonpolar nematic liquid crystal, containing splay, bend, and hybrid splay/bend (Hybrid Aligned Nematic (HAN)) elastic deformations, respectively, each of them generating flexoelectric polarization $P_{flexo}$. $\alpha$-plane is the plane of elastic deformation, which contains $P_{flexo}$, and it is oriented perpendicular to device substrates. Electrodes, deposited onto both substrates, for generating out-of-plane electric field, which field lines are perpendicular to the substrates.
b) Schematic presentation of liquid crystal alignment configurations of nonpolar nematic liquid crystal, containing splay, bend, and hybrid splay/bend (Hybrid Aligned Nematic (HAN)) elastic deformations, respectively, In-plane interdigitate electrode (IPS), generating substantially in-plane electric field is deposited onto one of device substrate. The plane $\alpha$ of liquid crystal alignment configuration is perpendicular to the device substrates and parallel to the electrodes.

Fig.4 Switching of liquid crystal molecules of nonpolar nematic liquid crystal aligned in splay configuration induced by in-plane electric field dc field generated by IPS electrode deposited on one of the device substrates. In field-off state the device optic axis is lying in the plane $\alpha$ and it is oriented parallel to the device substrates. Due to the coupling between applied electric field and $P_{flexo}$, the liquid crystal molecules, and thus device optic axis, are switching in a plane parallel to device substrates, clockwise or anticlockwise, depending on the field polarity.

Fig.5 Structure of newly synthesized ferroelectric (polar) nematic liquid crystals possessing large longitudinal molecular net dipole moment- $\mu$=11.4 D for RM734 and $\mu$=9.49 for DIO. Net dipole moment of these compounds made a certain angle with molecule long axis, which is one of the important conditions for appearance of polar molecular order in nematics. RM734 is used as polar nematic liquid crystal dopant in the present disclosure.

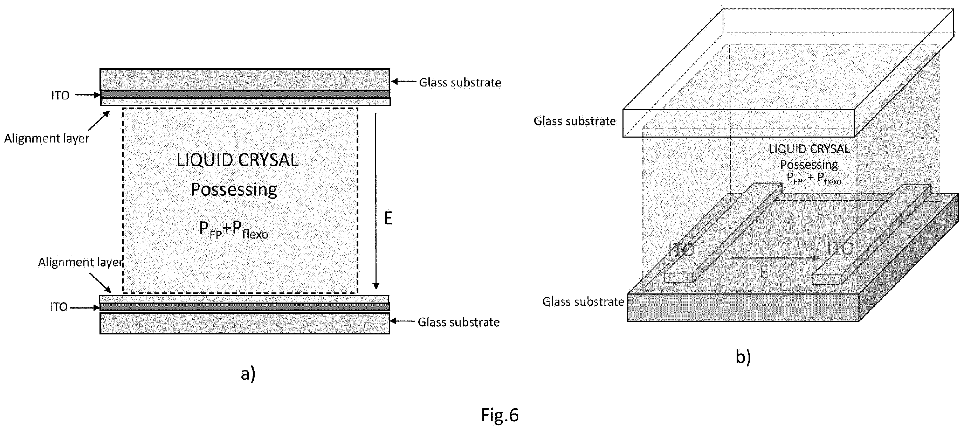

Fig.6 Liquid crystal device, according to the disclosure, containing polar nematic liquid crystal layer possessing elastically deformed alignment configuration, said liquid crystal device wherein a) the electrode arrangement is generating out-of-plane electric field, which lines are oriented along the substrates' normal and b) with electrode arrangement generating in-plane electric field, which lines are oriented parallel to the substrates' and perpendicular to the plane $\alpha$ of liquid crystal elastically deformed alignment (see Fig.3). These two devices possess $P_{FP}$, due to the polar molecular order of the polar nematic liquid crystal layer, localized in nanosized domains, and $P_{flexo}$, due to elastically deformed liquid crystal alignment configuration. The applied electric field in these two kinds of devices couples to the sum $P_{FP}$+ $P_{flexo}$ performing switching of the molecules of the polar nematic liquid crystal layer. According to the disclosure, the sum $P_{FP}$+ $P_{flexo}$ is larger than $P_{FP}$ and $P_{flexo}$ alone.

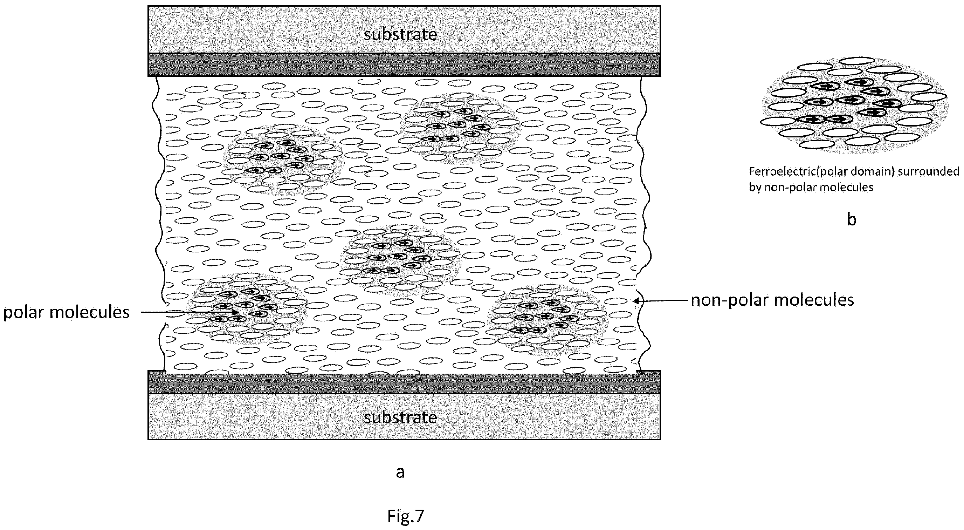

Fig.7 Schematically presentation of a model for the origin of $P_{FP}$ in the polar nematic liquid crystal layer, which is the formation of nano-domains of polar liquid crystal dopant(s) in the polar nematic liquid crystal layer, which are surrounded by nonpolar molecules with enhanced molecular order giving rise to N to Iso phase transition with 3,5°C for a mixture of nonpolar host E7 (Merck) 95wt% and polar nematic liquid crystal dopant RM734, 5wt%.

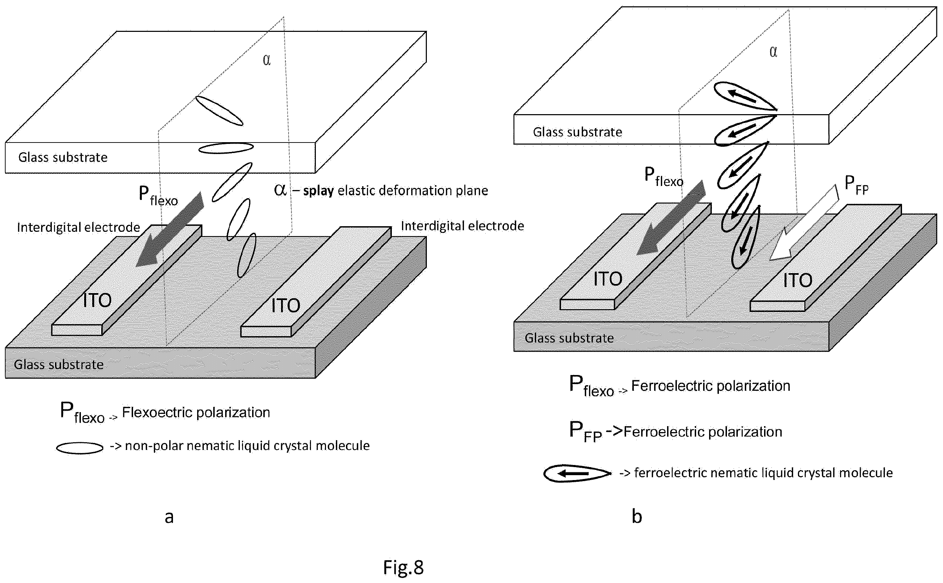

Fig.8 Comparison between cells with IPS electrodes a) filled with conventional nonpolar liquid crystal and b) filled with polar nematic liquid crystal (only the molecules of polar nematic liquid crystal dopant are depicted). In the case a) there is only $P_{flexo}$ present, whereas in the case b) the total polarization in the liquid crystal layer is $P_{FP}$ +$P_{flexo}$, which is higher than $P_{FP}$ and $P_{flexo}$ alone.

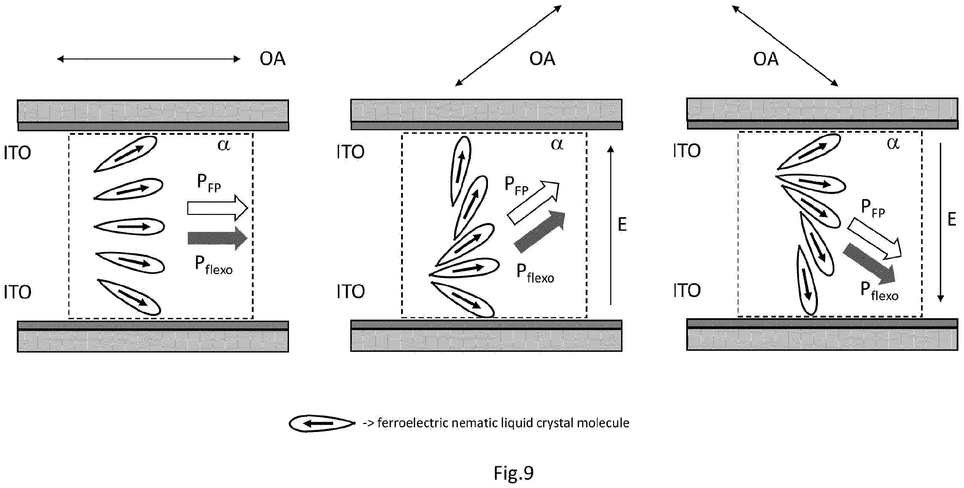

Fig.9 Schematic presentation of the liquid crystal molecules switching in device (only the polar molecules are depicted) containing polar nematic liquid crystal layer with splay alignment configuration due to generated electric field along the normal of the device substrates. Device optic axis direction follows the out-of-plane switching direction of the molecules, lying in the $\alpha$-plane of splay alignment configuration of the polar liquid crystal, as shown in this figure.

Fig.10 Schematic presentation of the switching liquid crystal molecules (only the polar molecules are depicted) in device containing polar nematic liquid crystal layer with splay alignment configuration due to the coupling of $P_{FP}$ + $P_{flexo}$ with the in-plane electric field, generated by IPS electrode, deposited onto one of the device substrates, which field lines are parallel to the device substrates and perpendicular to $\alpha$-plane, containing the liquid crystal splay alignment configuration. Device optic axis following the in-plane switching of the polar nematic liquid crystal layer as illustrated in this figure.

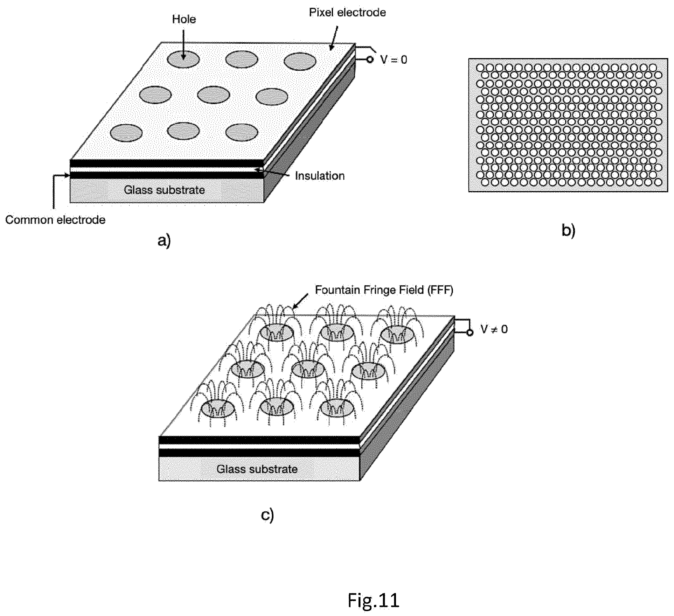

Fig.11 Electrode pattern of the device, with pixel electrode having circular holes, a) and b), for generating Fringe Field, which lines configuration c) resembles fountain, so called-Fountain Fringe Field (FFF), according to the disclosure.

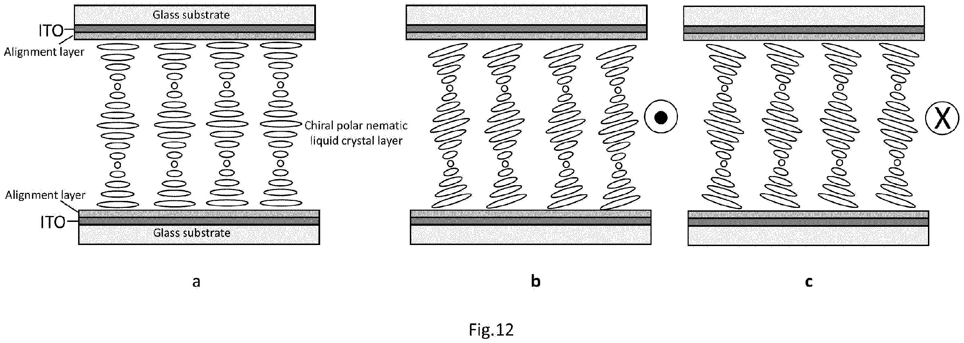

Fig.12 Cross section of the liquid crystal device, containing chiral polar nematic liquid crystal layer oriented in Standing Helix Texture (ST), i.e. with helix axis along the substrate normal. On both substrates are deposited IPS electrodes for generating in-plane electric field parallel to the substrate plane. The generated in-plain electric field switches the molecules of the chiral polar nematic liquid crystal layer in plane perpendicular to the field lines and to the substrates, clockwise or anticlockwise depending on the field polarity.

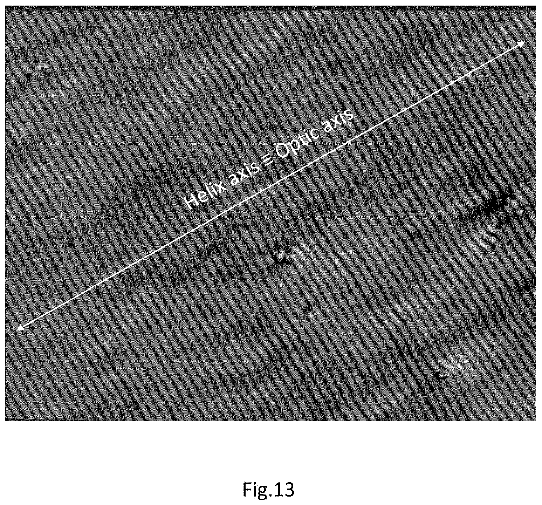

Fig.13 Photograph of the liquid crystal device, containing chiral polar nematic liquid crystal layer aligned in Uniform Lying Helix (ULH) texture, which optic axis is along the helix axis and is oriented parallel to the substrate plane.

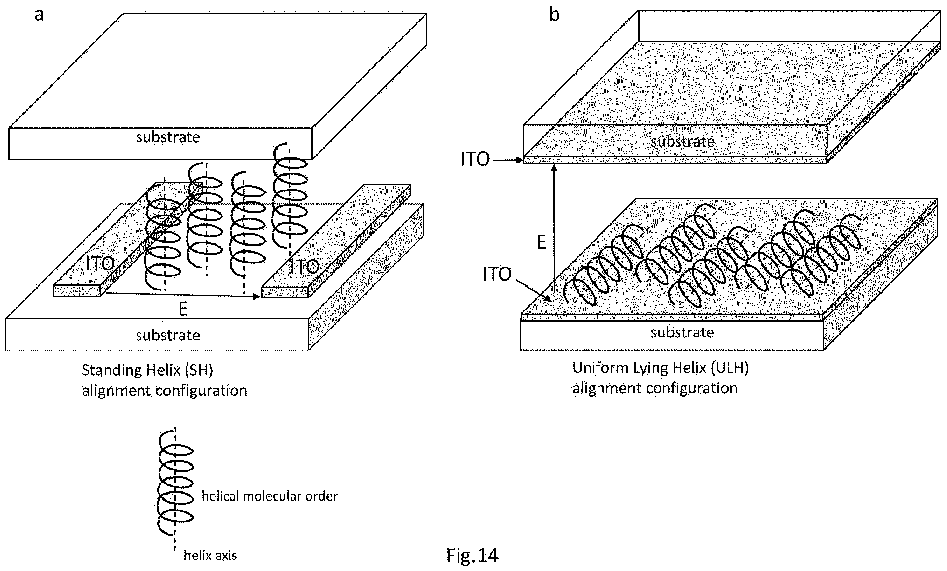

Fig.14. Schematic presentation of liquid crystal device, containing chiral polar nematic liquid crystal layer, oriented in Standing Helix Texture (ST), a) with IPS electrode deposited on one of the device substrates, generating switching of the device optic axis in a plane perpendicular to the electrodes, (see also Fig.13). b) liquid crystal device, according to the disclosure wherein the chiral polar nematic liquid crystal layer is oriented in Uniform Lying Helix (ULH) texture. Electrodes are deposited on both substrates for generating electric field along the substrate normal. The optic axis of this device is switching by the applied electric field in the substrate plane clockwise and anticlockwise depending on the field polarity.

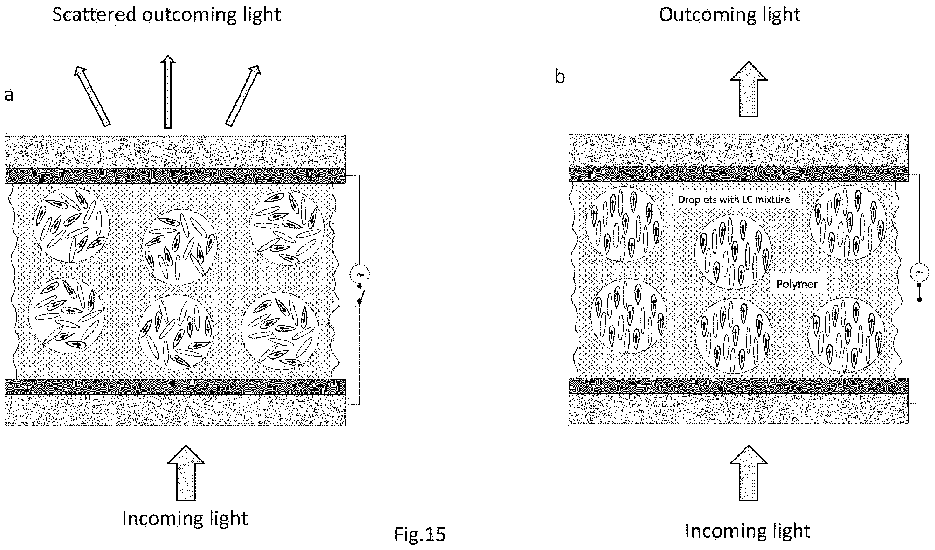

Fig. 15 Liquid crystal device containing Polymer Dispersed Liquid Crystal (PDLC) layer, in which, according to the patent application, polar nematic liquid crystal is dispersed in form of droplets in the polymer matrix. a) In field-off state the device is scattering the incoming light. b) Under an electric field generated by the electrodes, deposited onto their inner surfaces, the PDLC layer become transparent and light pass through the device without being scattered.

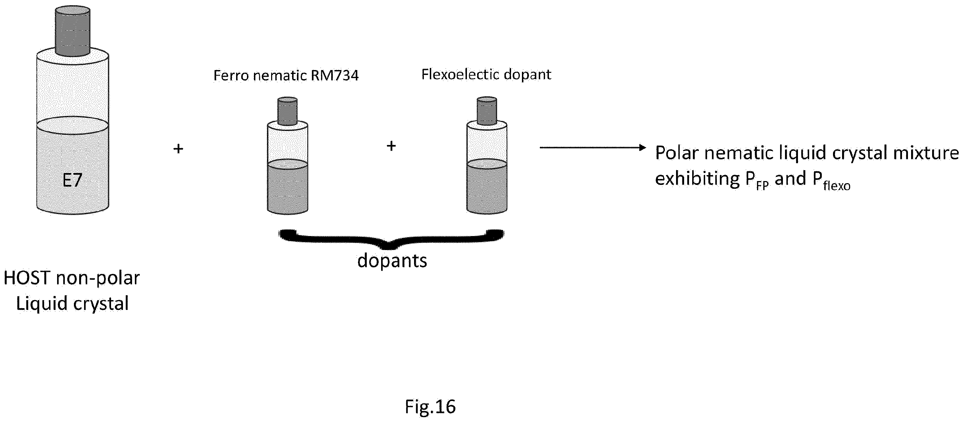

Fig.16 Preparation scheme of polar nematic liquid crystal with enhanced flexoelectric polarizability, according to the disclosure.

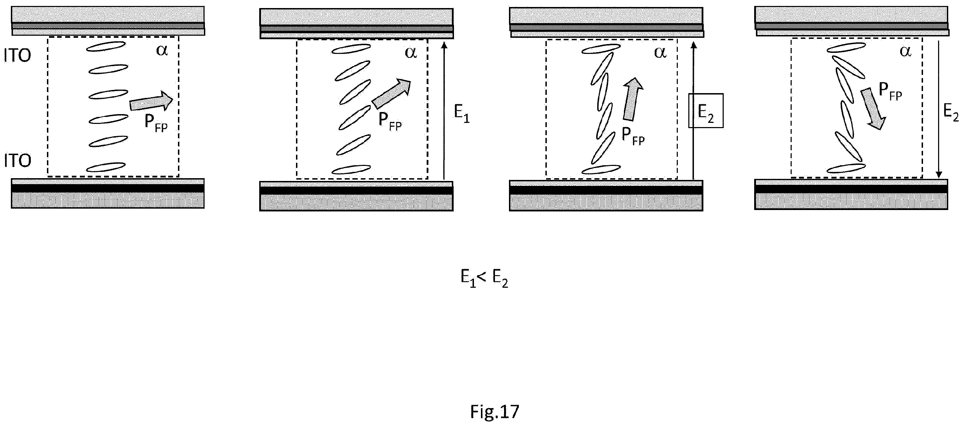

Fig.17 Schematically presentation of the switching of liquid crystal device, filled with polar nematic liquid crystal mixture E7(95wt%)+RM734(5wt%), by dc electric field. The device possesses only ferroelectric polarization $P_{FP}$.

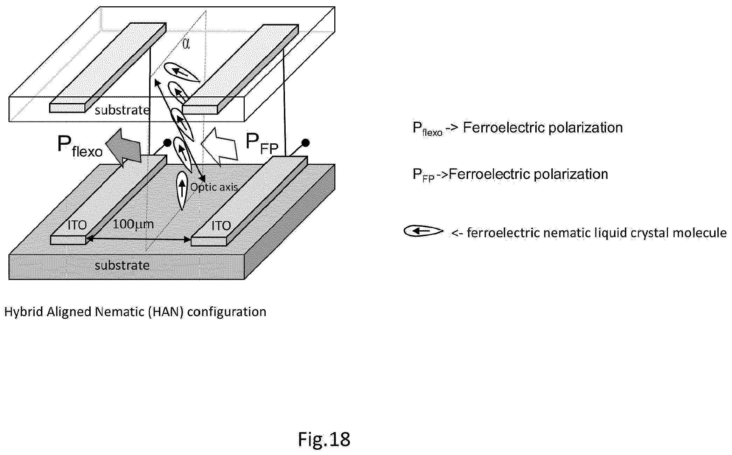

Fig.18 Schematically presentation of liquid crystal device filled with polar nematic liquid crystal mixture E7(95wt%) +RM734(5wt%) aligned in Hybrid Aligned Nematic (HAN) configuration. Ferroelectric polarization $P_{FP}$ and flexolectric polarization $P_{flexo}$ are present. Only ferroelectric nematic molecules are depicted.

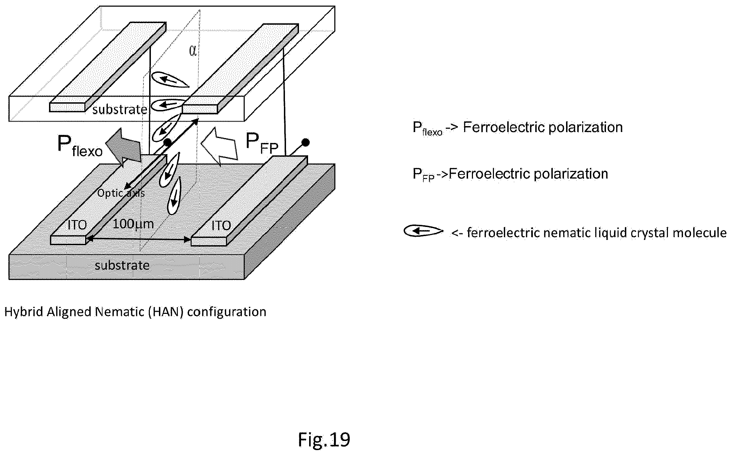

Fig.19 Schematically presentation of liquid crystal device filled with polar nematic liquid crystal mixture E7(95wt%) +RM734(5wt%) aligned in SPLAY configuration. Ferroelectric polarization $P_{FP}$ and flexolectric polarization $P_{flexo}$ are present. Only ferroelectric nematic molecules are depicted.

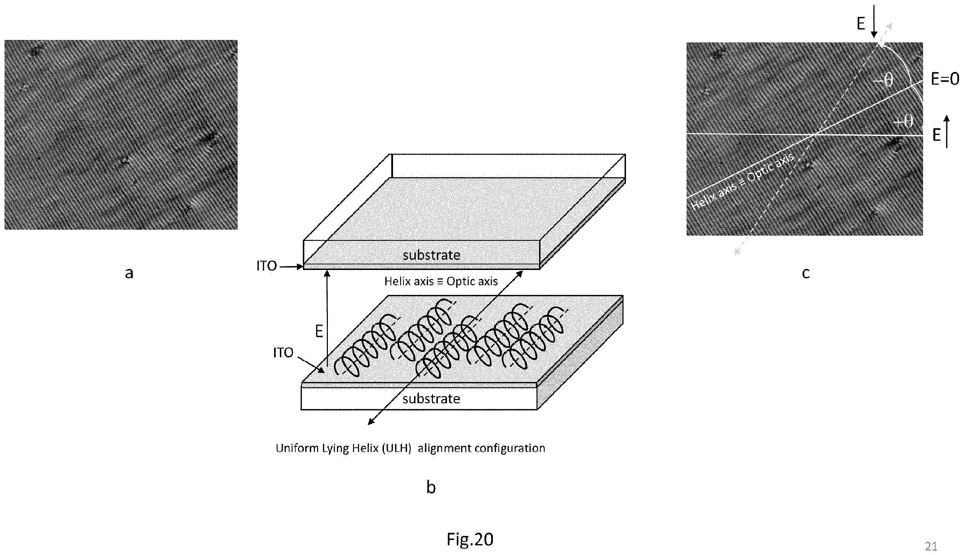

Fig.20 Liquid crystal device filled with chiral polar nematic liquid crystal mixture, containing 95wt% [E7(95wt) +.RM734(5wt%)] + 5wt% chiral dopant. a) the liquid crystal is aligned in Uniform Lying Helix (ULH) texture with helix axis being also the device optic axis, lying in the substrate plane. b) the electrodes of the device are deposited on the inner substrates' surface and generate electric field along the substrate normal. c) switching of the device optic axis under an applied dc electric field. The in-plane deviation of the device optic axis clockwise and anticlockwise, respectively, depends on the field polarity.

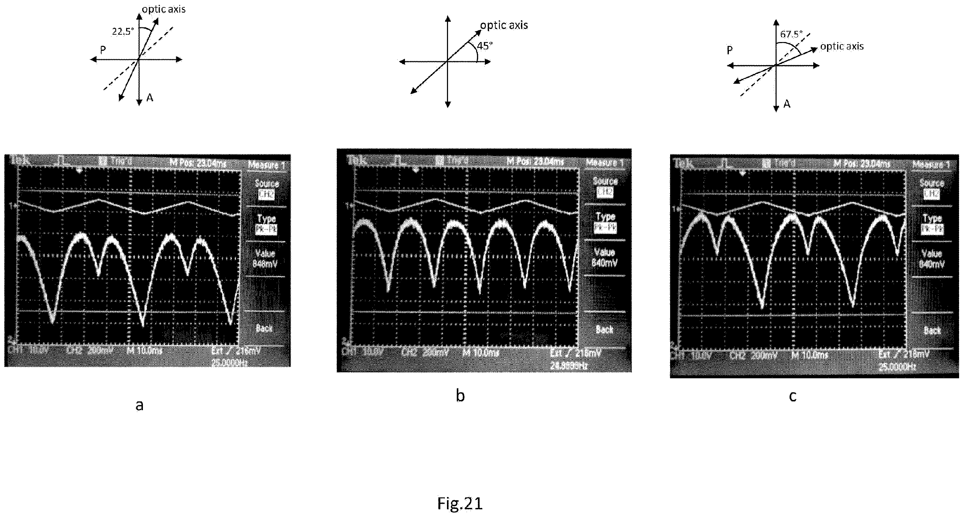

Fig.21 Electro-optic response of the device, presented in Fig. 20, is demonstrating the linear with the applied electric field character of the response as well as the in-plane switching character of the device optic axis. When the electro-optic response is linear with the applied electric field and switching of the device optic axis is taking place in the substrate plane than the electro-optic response is changing from a) out-of-phase to c) in-phase with the applied field, when rotating the device between two crossed polarizers to position 22.5° and 67.5°, respectively.

## Detailed description

From the state of art is known that certain nematic liquid crystal materials possess polar molecular order (Fig.2b), in the so-called ferroelectric phase, and thus exhibit ferroelectric polarization $P_{FP}$. In the polar phase of such materials the ferroelectric polarization $P_{FP}$ is of order several $\mu C/cm^2$ ( H. Nishikawa et al, Adv. Mater. 2017, 29, 1702354; R. J. Mandle, S. J. Cowling, J. W. Goodby, Phys. Chem. Chem. Phys. 19, 11429-11435 (2017)). Compared with ferroelectric Smectic C materials, exhibiting spontaneous polarization $P_s$, $P_{FP}$ in ferroelectric nematics Is several orders higher. Therefore, it is a problem to utilize ferroelectric nematics in LCDs since the large magnitude of $P_{FP}$ is related to severe problems with ions in LCDs. Moreover, to achieve high quality of alignment of ferroelectric nematic liquid crystal, which is of vital importance for the performance of LCDs, is a challenging and very difficult task due to intrinsic tendency for ferroelectric nematic materials to form domains separated by walls and defect lines (O.Lavrentovich, PNAS | June 30, 2020 | vol. 117 | no. 26 | 14629-14631).

To overcome the above-mentioned problems, a mixture of non-polar nematic liquid crystal was used as a host material, in which is dissolved ferroelectric nematic liquid crystal material in the form of a dopant. Such a mixture is easy to align, likewise the conventional non-polar nematic, and exhibits ferroelectric polarization $P_{FP}$. The magnitude of $P_{FP}$ of this mixture is comparatively small compared to one measured in the pure ferroelectric nematic being used as a dopant. The ferroelectric nematic dopant is forming nano-sized domains (Fg.7a), within the nematic host, having polar molecular order, and thus exhibiting $P_{FP}$. These domains are substantially uniformly distributed in the nematic host and modifying the physical properties of the host non-polar nematic host material by increasing the molecular order parameter around these nano-sized domains surrounded by the molecules of the non-polar nematic host (Fig.7b), resulting thus an increase of the total order parameter of the polar nematic liquid crystal mixture used in the liquid crystal device, according to the disclosure. The dimensions of the nano-sized domains should preferably be chosen to be less than that of the light which desirably is to pass through the device. This way, the scattering of the light by the nano-sized domains is reduced, and a more transparent device is provided. For example, the dimensions of any nano-sized domain may be in the interval of 10-100 nm.

As known, non-polar nematic liquid crystal layer aligned in splay, bend or splay/bend elastically deformed configuration generates flexoelectric polarization $P_{Flexo}$ (Fig.8a). According to present disclosure, a polar nematic liquid crystal mixture, wherein is dissolved polar liquid crystal dopant, is arranged in elastically deformed configuration, such as splay configuration, it generates additionally to $P_{FP}$, also flexoelectric polarisation $P_{Flexo}$ and their sum $P_{Flexo} + P_{FP}$, according to the disclosure, is larger than $P_{FP}$ and $P_{Flexo}$ alone. Such an example is given in Fig.8b, where only the polar dopant molecules are depicted. Hence, as consequence, polar nematic liquid crystal layer aligned in elastically deformed configuration, containing splay, bend and/or splay/bend deformations exhibits $P_{FP}$ and $P_{Flexo}$, which sum, according to the disclosure is larger than $P_{FP}$ and $P_{Flexo}$ alone. According to present disclosure, $P_{Flexo}$ can be enhanced additionally by dissolving in the polar nematic at least one dissoluble dopant, usually liquid crystal compound, possessing molecular shape asymmetry, such as drop or banana or with combination of drop and banana shape, and possessing molecular net dipole moment. The elastically deformed configuration of the liquid crystal layer is achieved by proper choice of alignment layer deposited at least onto one of the substrates of first or second portion of the liquid crystal device.

According to the disclosure, in one embodiment the generated by the device electrodes electric field couples to the polarization sum ( $P_{Flexo} + P_{FP}$) of the polar nematic liquid crystal layer performing switching of the liquid crystal molecules. In the case of electric field generated between the electrodes deposited on the first substrate and second substrate, which field lines are perpendicular to the substrate, the switching of the molecules generated by the field takes place in a plane $\alpha$ perpendicular to said first substrate and second substrate, as illustrated in Fig. 9.

According to at least some exemplary embodiments, the liquid crystal device is with electrode pattern deposited onto one of the substrates, configured as IPS electrode, generates in-plane electric field with lines substantially parallel to the substrate bearing the IPS electrode and perpendicular to the plane $\alpha$ of the splay liquid crystal alignment configuration. The in-plane electric field couples to the effective sum of polarizations $P_{Flexo}$ and $P_{FP}$, ( $P_{Flexo} + P_{FP}$) of the polar nematic liquid crystal, performing switching of the molecules of the polar nematic liquid crystal layer substantially in the plane of the device substrate, resulting thus in in-plane switching of the device optic axis, as depicted in Fig.10. Said device optic axis, which is lying in the liquid crystal alignment configuration plane $\alpha$, and it is oriented parallel to the interdigitated electrodes, is switching clockwise and anticlockwise, respectively, depending on the polarity of the field.

The device electrode may alternatively be configured in such way to generated fringe field electrical field, which in the case of pixel electrode with holes (Fig. 11) generate fringe electric fields with cylindrical symmetry around the holes with field lines resembling a fountain,i.e. Fountain Fringe Field (FFF). In this case, the liquid crystal molecules tend to orient along the field lines and the liquid crystal alignment configuration adopts fountain-shape distribution, containing splay and bend elastic deformations giving rise to flexoelectric polarization in the liquid crystal layer oriented in field-off state along the device substrates' normal.

The higher is the applied electric field the stronger is the field-induced flexoelectric polarization and the stronger is the interaction between the field and flexoelectric polarization $P_{flexo}$.

Introducing chirality in the polar nematic mixture, the molecules of the liquid crystal layer adopt helical molecular order characterized by pitch. In confined geometry, such as sandwich cells, the chiral polar nematic mixture may be aligned with helix axis parallel, perpendicular or random with respect to the substrates of device first substrate and second substrate. In all these three case the polar nematic mixture possesses ferroelectric polarization, whereas the flexoelectric polarization is induced by the applied electric field and its magnitude depend on the amplitude of the applied field and the magnitude helical pitch of the chiral polar nematic liquid crystal mixture.

The helical axis of the chiral polar nematic, according to the disclosure, may be oriented perpendicular to the first and second substrate. Such alignment configuration of the chiral polar nematic is known as Standing Helix (ST) texture (Fig.12a). In the device with such configuration, the chiral polar nematic mixture exhibits selective light reflection of the incoming light, which wavelength of selective light reflection depends on the helix pitch of the mixture as well as on the incident angle between the incoming light and helix axis. In the liquid crystal device, according to this embodiment, the in-plane applied electric field is generated by interdigital electrodes, as depicted in Fig.14a. The applied in-plane electric field is inducing simultaneous rotation of the molecules around axis perpendicular to the helix axis in a plane perpendicular to the direction of the applied field (as depicted in Fig. 12b and c). As a result, $P_{flexo}$ is induced along the applied electric field. $P_{FP}$ induces enlarging of the helix pitch and thus increase of $P_{flexo}$, which in its turn is changing the angle of light incidence with respect to the helix axis, resulting thus change in the wavelength of selective light reflection. These changes are closely related to the changes in the optical appearance of the liquid crystal device, according to the disclosure. Due to the presence of $P_{PF}$ and field induced $P_{flexo}$, the wavelength of selective reflection, refractive index and response times are changing when increasing the applied voltage.

The helical axis of the chiral polar nematic may alternatively oriented substantially parallel to the substrates along unique direction. Such a texture of the chiral polar liquid crystal mixture is known as Uniform Lying Texture (ULH) (Fig.13 and Fig.14b). In this embodiment the helix axis of ULH texture of the chiral polar liquid crystal layer is laying in substrates plane oriented along unique direction. The optic axis of the device, wherein the chiral polar nematic liquid crystal mixture is aligned in ULH texture, is along the helix axis of the mixture when the helix pitch is lower than the incident light wavelength. According to the disclosure, an electric field is applied between the electrodes deposited onto first and second substrate (Fig.14b), being thus perpendicular to the helix axis, resulting in fast in-plane switching of the liquid crystal optic axis clockwise or anti-clock direction, depending on the polarity of the applied electric field.

The liquid crystal alignment configuration, said alignment configuration which contains splay, bend or mixed splay/bend elastic deformation, may be stabilized by polymer network, created in the liquid crystal layer. Such polymer stabilization is made by dissolving small amount (usually few wt%) a photoreactive liquid crystal monomer in the liquid crystal mixture. After filling the liquid crystal device with this mixture and obtaining the desired liquid crystal alignment configuration of the liquid crystal layer, the device is illuminated with UV light resulting in photo polymerization of the photoreactive liquid crystal molecules in the liquid crystal layer, resulting formation a polymer network, which stabilizes the elastic deformation of the liquid crystal alignment configuration.

Advantageously, a polymer network is used for stabilization of ULH texture of the chiral polar nematic liquid crystal mixture. Such a polymer network is preserving the helical molecular order during switching process and facilitate the recovering of the chiral order if it is disturbed by the applied electric field during the switching process.

According to at least some exemplary embodiments, the polar nematic liquid crystal mixture is a component of polymer dispersed liquid crystal (PDLC) (Fig. 15). In field-off state, the alignment of the liquid crystal molecules in the liquid crystal droplets is substantially random. Random is also their distribution in the polymer matrix (Fig.15a). As consequence, PDLC film with thickness 10-50 $\mu$m, for instance, scatter strongly the incoming light, due to mismatching of the refractive indexes of the liquid crystal and the one of the polymer matrix (Fig.15a). When an electric field is applied to the PDLC film between the electrodes deposited onto first substrate and second substrate, the liquid crystal molecules in the droplets tend to align along the field direction and if the refractive index of the droplets and the one of the matrix matches in this state then the PDLC becomes transparent (Fig.15b). Due to stronger coupling between the $P_{FP}$ and $P_{flexo}$ of the polar nematic liquid mixture with the applied electric field, compared with the one of conventional PDLC material, wherein the liquid crystal is non-polar, the switching voltage from field-free light scattering state to field-on transparent state of the PDLC containing the polar nematic mixture is much lower.

In addition, the present disclosure relates also to a method of preparation of polar nematic mixture possessing ferroelectric polarization $P_{FP}$ and high flexoelectric polarizability, i.e. high $P_{flexo}$.

According to at least some exemplary embodiments in the present disclosure in a non-polar nematic host is dissolved at least one ferronematic nematic liquid crystal dopant (Fig.16). The non-polar nematic host is selected among the non-polar nematic materials exhibiting high flexolelectric polarization, which is enhanced further by dissolving in the host non-polar nematic host proper flexoelectric dopant(s) (Fig.16), according to (M.Skarabot et al, https://doi.org/10.1021/acsomega.2c00023). Such flexoelectric dopants can be chosen among mesogenic molecules with shape anisotropy and proper molecular net dipole moment regarding its magnitude and orientation with respect to the molecular axis. Both ferronematic and flexoelectric dopants must possess high solubility in the host material as well as chemical, thermal and light stability. The concentration of the ferronematic and flexoelectric dopants into the non-polar nematic mixture highly depends on the choice of non-polar nematic host and on the selected dopants. Optimal concentration of the ferronematic and flexoelectric dopants may be different and vary in broad range of concentrations. It is optimized to achieve a polar nematic mixture with high $P_{FP}$ and $P_{lexo}$, which sum $P_{FP}$ + $P_{lexo}$ is larger than $P_{FP}$ and $P_{lexo}$ alone.

**Example 1**

*Liquid crystal Device with uniform alignment of the polar nematic liquid crystal layer*

The liquid crystal device, according to the disclosure, comprises a conventional sandwich cell with electrodes deposited onto the device substrates for generating electric field along the device substrates' normal. On top of electrodes is deposited an alignment layer made from SE-130 (Nissan Chem.Ind.) unidirectionally rubbed, with antiparallel rubbing directions so that the polar nematic layer adopts uniform tilted alignment with small pretilt (2-5°) (Fig.17). The cell thickness is 5$\mu$m. The polar nematic is a mixture of nonpolar nematic liquid crystal host E7 (Merck) 95wt% and polar (ferronematic) nematic liquid crystal dopant RM734 (Fig.5) 5wt% (inhouse material). Between the electrodes is applied electric field E=0.05 V/$\mu$m and low frequency of 3Hz. It is measured rise time $\tau_{rise}$ = 0.085ms, whereas the rise time for a similar cell but containing the nonpolar nematic liquid crystal host E7, at the same field condition shows $\tau_{rise}$ = 1.08ms. i.e., it is two times longer than the one of the cell containing the polar nematic mixture E7(95wt% + RM734 (5wt%). Such a difference between these cells seems to be the higher molecular order parameter S of the mixture E7(95wt% + RR734 (5wt%), compared to the one of the host material E7. Such assumption is in accordance with our model according to which ferroelectric nematic liquid crystal dopant is forming nanosized polar domains upon dissolving in a nonpolar nematic liquid crystal host, such as E7. The nonpolar molecules of the host nematic liquid crystal, surrounding the domains, have higher molecular order parameter S compared to the rest of molecules in the bulk of the nonpolar nematic host, due to interaction with the polar nematic liquid crystal dopant molecules within the domains. Due to presence of such polar domains the polar liquid crystal layer, exhibiting $P_{FP}$, results in decrease of the rise switching time $\tau = \gamma_{eff}/PE$.

For the same reason, increase of S due to the presence of ferroelectric nano domains, difference between the dielectric anisotropy $\Delta\varepsilon$ of the host nonpolar nematic liquid crystal E7 and the one of its mixture containing polar (ferronematic) nematic liquid crystal dopant RM734 - E7(95wt% + RR734 (5wt%), is found also. The measured $\Delta\varepsilon$ for E7 is at 1kHz - 13.11 (25°C), whereas the one measured for the mixture E7+RM734 at same condition is -14.14.

Another prove that the scalar order parameter S of the polar nematic liquid crystal mixture E7+RM734 is higher is that the phase transition temperature of E7+RM734 (N-65.4°C-Iso) is higher than the one of E7(N-62°C-Iso).

The higher S of the polar liquid crystal mixture also affects the Fredericks threshold:

$$V_{thr}^{classical} = \pi \sqrt{\frac{K_1}{\varepsilon_0 \varepsilon_a}}$$

For E7+RM734 is measured $V_{thr}$=1.2V, whereas for E7 is $V_{thr}$=1.05V. Because $\Delta\varepsilon \sim S$ whereas $K_1 \sim S^2$ then $V_{thr} \sim S^{1/2}$. The higher $V_{thr}$ of E7+RM734 means that it has higher S than the one of host material E7, which, in fact is another indication of the presence of nanodomains containing polar dopant molecules with high S, which transfers to the surrounding nonpolar host liquid crystal molecules, increasing thus the overall S of the polar nematic liquid crystal mixture containing polar liquid crystal dopant.

For visualizing the switching of the molecules in the liquid crystal layer, deposited between the first and second substrates, the liquid crystal device, according to the present disclosure, is placed between two polarizers. Furthermore, additional optical elements, besides the polarizers, could be included in the device architecture, such as optical plates, mirror, filters, etc. For a person who is skilled in the art will be apparent that various changes and modifications can be made therein without departing from the spirit and scope thereof.

## Example 2

*Liquid crystal Device with hybrid alignment configuration of the polar nematic liquid crystal layer*

Herein is repeated example 1 (Fig.17). However, the alignment layers deposited onto the inner substrates of device sandwich cell are promoting different kind of alignment. The alignment layer onto one of the inner substrates' surface is deposited thin alignment layer made from SE-130 alignment material (Nissan Chem. Ind.) and rubbed unidirectionally so that it is promoting almost planar (slightly pretilted) alignment of the liquid crystal molecules in contact with the alignment layer, which penetrates, via elastic forces, into the liquid crystal bulk. Onto the other substrate inner surface is deposited alignment layer, which promotes vertical (homeotropic) alignment of the liquid crystal molecules in contact with this alignment layer, which also penetrates in the liquid crystal bulk. The alignment layer for vertical alignment is made from SE-1211 alignment material for LCDs (Nissan Chem. Ind.). As a result, the molecules in the liquid crystal layer adopt elastic deformation, known as Hybrid Aligned Nematic (HAN) configuration, represented in Fig.18. HAN configuration of the polar liquid crystal alignment is lying in a plane $\alpha$ perpendicular to the substrates, which contains the optic axis of HAH configuration inclined with respect of the substrates normal. Due to the HAN configuration of the polar nematic liquid crystal mixture in the cell, the device will exhibit polarizations $P_{flexo}$ and $P_{FP}$, resulting in total polarization $P_{total}= P_{FP} +P_{flexo}$, fulfilling the conditions $P_{total}> P_{FP}$ and $P_{total}> P_{flexo}$, according to the disclosure. The in-plane electric field in the polar liquid crystal layer, enclosed in between first and second device substrate, is generated by a couple of electrodes deposited on the device substrates with distance L= 100$\mu$m from each other on the substrate, and arranged to overlap in vertical direction. These electrodes generate electric field with field component substantially parallel to the substrates. The electric field couples to the total polarization $Pt_{total}=P_{FP}+P_{flexo}$ of the polar nematic liquid crystal layer to perform switching of the liquid crystal molecules resulting in swinging of the optic axis of HAN liquid crystal configuration, clockwise or anticlockwise, depending on the field polarity. The cell thickness is about $3\mu m$.

Two similar liquid crystal devices are fabricated and filed with nonpolar nematic liquid crystal host E7 (Merck) and with polar nematic liquid crystal mixture E7 (95wt%) + RM734 (5wt%), respectively. The measured response times for the cells $\tau_{rise}$ and $\tau_{fall}$ are at applied electric field $V_{pp}$=20V:

$$E7 \rightarrow \tau_{rise} = 9 \text{ ms} \text{ and } \tau_{fall} = 28ms$$

$$E7+RM734 \rightarrow \tau_{rise} = 600 \text{ }\mu s \text{ and } \tau_{fall} = 2,4ms$$

Whereas in the cell containing the nonpolar nematic liquid crystal host E7 only $P_{flexo}$, due to HAN configuration is present in the cell, The cell containing the polar nematic liquid crystal mixture E7+RM734, $P_{FP}$ is present In addition to $P_{flexo}$, The shorter switching times of the device, containing the polar nematic liquid crystal mixture E7 + RM734. is a prove for the enhancement of the polar coupling strength due to increase of the polarization of the liquid crystal layer from $P_{flexo}$ to $P_{total}$ = $P_{flexo}$ + $P_{FP}$ (where $P_{total}$ >$P_{flexo}$ and $P_{total}$ >$P_{FP}$, according to disclosure).

**Example 3**

*Liquid crystal Device with splay alignment configuration of the polar nematic liquid crystal layer*

Example 2 is repeated (Fig.17). However, onto the inner substrates'surface is deposited $SiO_2$ thin layer by oblique evaporation, which promotes alignment of the liquid crystal molecules with pretilt 25-27° with respect to the substrate. The substrates are assembled in a sandwich cell with thickness of $2.9\mu m$ and arranged in such way that the liquid crystal adopts splay deformed alignment configuration (Fig.9 and Fig.19) with optic axis substantially parallel to the device substrates. The splay deformation plane $\alpha$ is oriented perpendicular to the substrates and parallel to the electrodes. Two such devices are produced - one filled with nonpolar liquid crystal host E7and the other filled with the polar nematic liquid crystal mixture E7+RM734. The splay cell containing E7, $P_{flexo}$ is only present, whereas the splay cell containing the polar mixture E7+RM734, possesses $P_{total}$=$P_{flexo}$+$P_{FP}$.

The device electrodes configuration is like the one in Example 2 and generates in-plane electric field, perpendicular to the spay deformation plane $\alpha$. Electric field is generating switching of the liquid crystal molecules, and thus of the splay optic axis, substantially in the plane of the device substrates, clockwise or anticlockwise, depending on the field polarity. The benefits to have polar nematic liquid crystal layer with enhanced polarization $P_{total}$ = $P_{fleyo}$ + $P_{FP}$, will become evident from the following measurements performed on the two devices-one filled with nonpolar liquid crystal host E7 and other filled with the polar nematic liquid crystal mixture E7+RM734.

Response time:

Switching of the liquid crystal molecules are result of the polar coupling of the applied electric field either with $P_{flexo}$, in the device containing host nonpolar liquid crystal E7, or with $P_{total}$ = $P_{fleyo}$ + $P_{FP}$, in the device containing polar nematic liquid crystal mixture E7+RM734. For the polar coupling in liquid crystal is valid the relation $\tau=\gamma/PE$, where $\gamma$ is the liquid crystal viscosity, P is the polarization of the liquid crystal, and E is the applied electric field. For the switching, due to polar coupling, is valid $\tau = \gamma/PE$ and usually is valid $\tau_{\rho ise} \cong \tau_{fall}$.

The measured response times for nonpolar and polar liquid crystal device, respectively, are:

$$E7 \rightarrow \tau_{\rho ise} = 18.2 \text{ ms}$$

$$E7+RM734 \rightarrow \tau_{\rho ise} = 15 \text{ ms}.$$

This means that the polar nematic mixture has faster response and thus higher polarization ->$P_{total}$ >$P_{flexo}$.

Induced in-plane deviation of the device optic axis $\theta$

The induced in-plane deviation of the device optic axis $\theta$ could be expressed as $\theta=\beta E$, where $\beta$ is a coefficient, which magnitude is proportional to the polarization of the liquid crystal layer. The larger is P the larger is the field-induced in-plane deviation of the device optic axis $\theta$, which direction - whether clockwise or anticlockwise, depends on the field polarity.

Experimentally are estimated θ for:

$$E7 \rightarrow \theta = 35° - 40° \text{ for applied field } E = 0.08V/mm$$

$$E7 + RM7 \rightarrow \theta = 35° - 40° \text{ for applied field } E = 0.04V/mm$$

As seen, the same in-plane deviation θ of the device optic axis is induced in the cell containing the polar nematic liquid crystal mixture E7+RM7 for twice lower applied electric field, indicating that the magnitude of polarization of the polar mixture $P_{total}$ is twice higher than $P_{flexo}$.

In the described liquid crystal device in Example 1, at field-off state, i.e. when no electric field is applied, is present only $P_{FP}$.

**Example 4**

*Liquid crystal Device containing chiral polar nematic liquid crystal layer (having molecular helical order*

In chiral nematic liquid crystal, the so-called cholesterics, their molecules form helical order characterized by pitch.

The example presented here is a liquid crystal device, which comprises sandwich liquid crystal cell like the one described in Examples 1 (Fig.17). Onto each of the substrates is deposited thin ITO electrode for generating electric field along the substrate normal. The inner surface of the cell substrates is covered by alignment layer made from SE-130 (Merck). This alignment layer is unidirectionally rubbed and the device substrates, upon assembling, are oriented in such way that the rubbing directions of their alignment layer being antiparallel. The cell gap thickness is 2.1 μm. The liquid crystal material filling the cell gap is a liquid crystal mixture containing 95wt% of the polar liquid crystal mixture (95wt%E7+5wt% RM734) and 5wt% chiral dopant. In this cell, after several cycles of thermal and applied electric treatment of the filled cell, the chiral polar nematic liquid crystal aligns in Uniform Lying Helix (ULH) texture (Fig.20a and b). The electrodes, deposited onto the substrates, are generated electric field along the substrate normal, which induces simultaneous rotation of the liquid crystal molecules around the field direction. As result of the simultaneous switching of the liquid crystal molecules around the direction of the applied electric field, the optic axis of the cell, which is directed along the helix axis, deviates in the plane of the substrate (in-plane deviation) clockwise or anticlockwise depending on the field polarity, resulting in an electro-optic response, when the device is placed between two crossed polarizers, known from the literature, as "Electro-optic response in cholesterics(chiral nematics) aligned in ULH texture ("Flexoelectric electro-optics of a cholesteric liquid crystal", J. S. Patel and Robert B. Meyer, Phys. Rev. Lett. 58, 1538, 1987). Upon applied electric field in the device take place both $P_{flexo}$ and $P_{PF}$, which magnitude increases with the electric field. The field-induced in-plane deviation (switching) of the optic axis is linear to the field, at moderate fields, which is evident from electro-optical response of the device presented in Fig 21a and c. The deep in the electro-optical response in Fig.21b is a result of the dielectric coupling of the liquid crystals with the applied field. Fig.21a and c) correspond to the electro-optic response of the device at two position of the device optic axis, 22,5° and 67.5°, with respect to the transmission direction of analyzer. As seen, the electro-optic response at these two positions of the device is out-of-phase and in-phase, respectively, with the driving voltage, which in fact is a prove for the linear in-plane field-induced switching of the device optic axis.

The measured response time is $\tau = \tau_{rise} = \tau_{fall} = 120\text{-}150$ μs. To preserve the UHL texture of the chiral polar nematic liquid crystal in the device, a small amount of photoreactive liquid crystal monomer (usually few precent) is dissolved in the chiral polar liquid crystal mixture. Once the desired UHL alignment of the liquid crystal layer in the device is achieved, then device is illuminated by UV light for polymerizing the photoreactive liquid crystal monomer and creating a polymer network in the liquid crystal bulk, which stabilizes the ULH texture of the chiral polar nematic liquid crystal mixture.

This device is inserted between two crossed polarizers to obtain electro-optic response due to field induced in-plane switching of the device optic axis. Person with skill of the art may modify and include in the device architecture other optical elements, such as optical plates, filters, mirror, etc.

In general, while the disclosure has been described in detail with reference to specific embodiments thereof, it will be apparent for one skilled to the art that various changes and modifications can be made therein without departing from the spirit and scope thereof.

**Claims**

**1.** A liquid crystal device comprising:

a first portion and a second portion, each portion comprising a respective substrate; and

a liquid crystal layer arranged in between the first portion and the second portion, wherein said liquid crystal layer comprises a mixture of a non-polar nematic liquid crystal and at least one ferroelectric nematic liquid crystal dopant;

wherein the ferroelectric nematic liquid crystal dopant is provided as phaseseparated nano-sized domains surrounded by the non-polar nematic liquid crystal molecules, and wherein said liquid crystal layer having a polar nematic phase **characterized by** ferroelectric polarization and flexoelectric polarization, wherein the sum of said ferroelectric polarization and flexoelectric polarization has a magnitude larger than the magnitude of said ferroelectric polarization and said flexoelectric polarization taken separately; and

wherein at least one of the respective substrates, on an inner surface thereof facing the liquid crystal layer, is provided with an electrode pattern for generating an electric field within the liquid crystal layer, wherein the electric field is configured to couple with the flexoelectric polarization and the ferroelectric polarization of the liquid crystal layer to perform switching of said liquid crystal layer.

2. The liquid crystal device according to claim 1, wherein the ferroelectric nematic crystal dopant is chosen from RM734 or DIO.

3. The liquid crystal device according to claim 1 or 2, wherein said mixture further comprises at least one flexoelectric dopant **characterized by** an asymmetric molecular shape such as drop, banana or combination of drop and banana shape.

4. The liquid crystal device according to any one of the preceding claims, wherein said flexoelectric polarization is **characterized by** elastic deformation of splay, bend or mixed splay/bend type in a plane oriented perpendicular to the first and/or second portion.

5. The liquid crystal device according to claim 1, wherein the liquid crystal layer possesses helical molecular order.

6. The liquid crystal device according to claim 5, wherein the helix axis of the helical molecular order is oriented substantially along the normal of the substrate of the first and/or second portion.

7. The liquid crystal device according to claim 5 wherein the helix axis of the helical molecular order is oriented substantially parallel to the substrate of the first and/or second portion of the device.

8. The liquid crystal device according to any one of the preceding claims, wherein the liquid crystal layer comprises a polymer network.

9. The liquid crystal device according to any one of the preceding claims, wherein the liquid crystal layer comprises at least one dichroic dye.

10. The liquid crystal device according to any one of the preceding claims, wherein the electrode pattern is configured such that the electric field lines of the electric field are oriented substantially orthogonal to the substrate of the first portion and/or the second portion.

11. The liquid crystal device according to any preceding claims, wherein the electrode pattern is configured such that the electric field lines of the electric field are oriented substantially orthogonal to the plane of the elastic deformation.

12. The liquid crystal device according to claim 11, wherein the electrode pattern is provided with openings such that the electrode pattern is configured to produce fringe electric fields around said openings.

13. A liquid crystal device according to any one of the preceding claims, wherein the liquid crystal layer is a polymer dispersed polar nematic liquid crystal.

14. The liquid crystal device according to any one of the preceding claims, and wherein at least one of the respective substrates, on an inner surface thereof facing the liquid crystal layer, is provided with an alignment layer arranged to interact with the liquid crystal layer.

15. The liquid crystal device according to any one of the preceding claims, wherein the first substrate, on an inner surface thereof facing the liquid crystal layer, is provided with a first electrode pattern and wherein the second substrate, on an inner surface thereof facing the liquid crystal layer, is provided with a second electrode pattern.

Non-polar molecule with symmetric shape

Non-polar molecule with asymmetric shape

Drop-shape    Bend (banana)-shape    Drop/bend shape

Polar molecule with symmetric shape

Polar molecule with asymmetric shape

Drop-shape    Bend (banana)-shape    Drop/bend shape

a

b

FIG.1

$\underline{n} \neq -\underline{n}$

$-\underline{n}$

$\underline{n}$

$P_{FP}$

Ferroelectric nematic liquid crystal
(polar molecular order)

b

$\underline{n} = -\underline{n}$

$-\underline{n}$

$\underline{n}$

Conventional nematic liquid crystal
(non-polar molecular order)

a

FIG.2

a)

Splay

Bend

Hybrid Aligned Nematic (HAN)

⬭ -> nonpolar nematic liquid crystal molecule-

Fig.3

b)

Splay       Bend      Hybrid Aligned Nematic (HAN)

⬭ -> nonpolar nematic liquid crystal molecule-

Fig.3

**RM734**
Iso – 189°C - N - 133 °C - $N_F$ - 75 °C - Cr ; $\mu = 9.49$ D

**DIO**
Iso – 174 °C - N - 84 °C - X - 70 °C - $N_F$ - 35 °C - Cr ; $\mu = 11.4$ D

DOI: 10.1039/d2sm00543c

FIG.5

EP 4 478 124 A1

ITO

Alignment layer

Alignment layer

ITO

Glass substrate

LIQUID CRYSAL

Possessing

$P_{FP}+P_{flexo}$

E

Glass substrate

a)

Glass substrate

LIQUID CRYSAL

Possessing

$P_{FP}+P_{flexo}$

ITO

ITO

E

Glass substrate

b)

Fig.6

polar molecules

non-polar molecules

Ferroelectric(polar domain) surrounded by non-polar molecules

b

a

Fig.7

P$_{flexo}$ -> Flexoectric polarization

⬭ -> non-polar nematic liquid crystal molecule

a

P$_{flexo}$ -> Ferroelectric polarization

P$_{FP}$ ->Ferroelectric polarization

⬅ -> ferroelectric nematic liquid crystal molecule

b

Fig.8

Fig.9

-> ferroelectric nematic liquid crystal molecule

Fig.11

Fig.12

Fig.13

a

substrate

ITO

ITO

E

substrate

Standing Helix (SH)
alignment configuration

b

substrate

ITO →

E

ITO

substrate

Uniform Lying Helix (ULH)
alignment configuration

helical molecular order

helix axis

Fig.14

Fig.15

Ferro nematic RM734      Flexoelectic dopant

E7

HOST non-polar
Liquid crystal

dopants

Polar nematic liquid crystal mixture
exhibiting $P_{FP}$ and $P_{flexo}$

Fig.16

Fig.17

$E_1 < E_2$

$P_{flexo}$ -> Ferroelectric polarization

$P_{FP}$ ->Ferroelectric polarization

<- ferroelectric nematic liquid crystal molecule

Hybrid Aligned Nematic (HAN) configuration

Fig.18

$P_{flexo}$ -> Ferroelectric polarization

$P_{FP}$ -> Ferroelectric polarization

<- ferroelectric nematic liquid crystal molecule

Hybrid Aligned Nematic (HAN) configuration

Fig.19

EP 4 478 124 A1

Fig.20

Helix axis ≡ Optic axis

Fig.21

Europäisches
Patentamt

European
Patent Office

Office européen
des brevets

# EUROPEAN SEARCH REPORT

**Application Number**

EP 23 17 9874

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/117552 A1 (MERCK PATENT GMBH [DE]) 9 June 2022 (2022-06-09) | 1,4,10, 14,15 | INV. G02F1/137 |
| A | * page 47 - page 48; example 1 * | 2,3,5-9, 11-13 | G02F1/141 |
| A | NEREA SEBASTI\'AN ET AL: "Polarization patterning in ferroelectric nematic liquids", ARXIV.ORG, CORNELL UNIVERSITY LIBRARY, 201 OLIN LIBRARY CORNELL UNIVERSITY ITHACA, NY 14853, 19 January 2023 (2023-01-19), XP091417475, * the whole document * | 1-15 | |

**TECHNICAL FIELDS SEARCHED (IPC)**

G02F

The present search report has been drawn up for all claims

| Place of search | Date of completion of the search | Examiner |
|---|---|---|
| Munich | 12 February 2024 | Lüssem, Georg |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 478 124 A1**

## ANNEX TO THE EUROPEAN SEARCH REPORT
## ON EUROPEAN PATENT APPLICATION NO.

EP 23 17 9874

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2024

| Patent document cited in search report | Publication date | Patent family member(s) | | Publication date |
|---|---|---|---|---|
| WO 2022117552 A1 | 09-06-2022 | EP | 4256000 A1 | 11-10-2023 |
| | | EP | 4256001 A1 | 11-10-2023 |
| | | JP | 2023551934 A | 13-12-2023 |
| | | JP | 2023553865 A | 26-12-2023 |
| | | KR | 20230113776 A | 01-08-2023 |
| | | TW | 202231844 A | 16-08-2022 |
| | | TW | 202231846 A | 16-08-2022 |
| | | US | 2024002727 A1 | 04-01-2024 |
| | | WO | 2022117551 A1 | 09-06-2022 |
| | | WO | 2022117552 A1 | 09-06-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7876385 B2

**Non-patent literature cited in the description**

- **I.DOZOV**. Flexoelectically controlled twist texture in a nematic liquid crystal. *J.de Phys.Lett*, 1982, vol. 43, L-365-L369
- **L.KOMITOV et al.** A novel polar electro-optic effect in reversibly pretilted nematic liquid crystal layers with weak anchoring. *Proceeding of 3rd International Display research Conference*, October 1983
- **M.SKARABOT et al.** Flexoelectric polarization in a nematic liquid crystal enhanced by dopants with different molecular shape polarities. *ACS Omega, February, ACS Omega*, 2022, vol. 7 (11), 9785-9795
- **XI CHEN et al.** Polar in-plane surface orientation of a ferroelectric nematic liquid crystal: Polar monodomains and twisted state electro-optics. *PNAS*, 2021, vol. 118 (22)
- **A FLUID LIQUID-CRYSTAL MATERIAL WITH HIGHLY POLAR ORDER** ; **HIROYA NISHIKAWA et al.** *Adv. Mater.*, 2017, vol. 29, 1702354
- **H. NISHIKAWA et al.** *Adv. Mater.*, 2017, vol. 29, 1702354

- **R. J. MANDLE** ; **S. J. COWLING** ; **J. W. GOODBY**. *Phys. Chem. Chem. Phys.*, 2017, vol. 19, 11429-11435
- **M.CESTARI et al.** *Phase behavior and properties of the liquid-crystal dimer 1",7"-bis(4-cyanobiphenyl-4'-yl) heptane: A twist-bend nematic liquid crystal*, https://doi.org/10.1103/PhysRevE.84.031704
- **SUPREET, K et al.** Structural organization and molecular self-assembly of a new class of polar and non-polar four-ring based bent-core molecules. *Journal of Molecular Liquids*, 2019, vol. 295, 11168
- **MIHA SKARABOT et al.** *Flexoelectric polarization in a nematic liquid crystal enhanced by dopants with different molecular shape polarity*, https://doi.org/10.1021/acsomega.2c00023
- **O.LAVRENTOVICH**. *PNAS*, 30 June 2020, vol. 117 (26), 14629-14631
- **J. S. PATEL** ; **ROBERT B. MEYER**. Flexoelectric electro-optics of a cholesteric liquid crystal. *Phys. Rev. Lett.*, 1987, vol. 58, 1538